# EUROPEAN PATENT SPECIFICATION

(11) **EP 3 986 699 B1**
(45) Date of publication and mention of the grant of the patent: **06.03.2024**
(21) Application number: 20730655.6
(22) Date of filing: 09.06.2020
(51) Int. Cl.: B29C 64/141, B29C 64/205, B29C 64/321, B33Y 30/00

(54) **RECOATER FOR A THREE-DIMENSIONAL PRINTER, THREE-DIMENSIONAL PRINTER AND PROCESS FOR THREE-DIMENSIONAL PRINTING OF GRAINED MATERIAL**
RECOATER FÜR EINEN DREIDIMENSIONALEN DRUCKER, DREIDIMENSIONALER DRUCKER UND VERFAHREN ZUM DREIDIMENSIONALEN DRUCKEN VON KÖRNIGEM MATERIAL
RECOUVREMENT POUR UNE IMPRIMANTE TRIDIMENSIONNELLE, IMPRIMANTE TRIDIMENSIONNELLE ET PROCÉDÉ D'IMPRESSION TRIDIMENSIONNELLE DE MATÉRIAU GRAINÉ

(30) Priority: 19.06.2019 EP 19181113
(43) Date of publication of application: 27.04.2022
(73) Proprietor: Refractory Intellectual Property GmbH & Co. KG, 1100 Wien (AT)
(72) Inventor: SCHLAUTMANN, Philipp, 33154 Salzkotten (DE); KOLLENBERG, Wolfgang, 50321 Brühl (DE)
(74) Representative: Pacher, Peter
(86) International application number: PCT/EP2020/065974
(87) International publication number: WO 2020/254154

(56) References cited:
- CN-U- 208 577 191
- US-A1- 2018 207 872
- US-A1- 2018 304 302

## Description

The invention relates to a recoater for a three-dimensional (3D) printer, to a three-dimensional printer and a process for three-dimensional printing, in particular for printing a coarse grain material.

So called "3D powder bed printers" or "powder-layer 3D printers" are one type of 3D printers commonly used for printing powder materials in a layer by layer sequence. Such printers are exemplarily disclosed in WO 2016/176432 or in US 2004/0182510 A1. For example, in such "binder jetting 3D printers", a 3D object (a "part") is achieved ("printed") by successively applying layers of a powder in a build space and treating selected parts of these layers with a binder. US 2018/0304302 A1 discloses a metering apparatus and corresponding method to meter a powder material in a three-dimensional (3D) printing system. US 2018/0207872 A2 discloses a device for applying powder layers across a substrate or atop an existing powder bed.

One important step in powder-layer 3D printers is the application of the layers of material in the build space. One common way of applying a powder is performed by the extraction of a defined quantity of powder material from a material reservoir onto a certain area of the build surface. The build surface is the area where the material is added, normally the last deposited layer which becomes the foundation upon which the next layer is formed. For the first layer, the build surface is often the build platform. After the (localized) deposition of material onto the build surface, the material is pushed and distributed over the build surface to form a layer of material (often a powder). The process of applying such layers is often called "recoating" and the respective device that performs this recoating is thus often called "recoater". Generally, such recoaters have a fixed (that is a non-movable) powder reservoir and a moving part (such as e.g. rollers or sliders / blades) for pushing and distributing the powder across the build surface.

While the prior art recoaters and 3D printers work well for fine and ultra-fine materials (e.g. powders with grain sizes clearly smaller than 1 mm, such as a powder with a maximum grain size of 50-70 µm) of good flowability and small amount of materials, those recoaters and 3D printers are not well suitable for use with a coarse material or materials with poor flowability. The present invention is particularly useful for printing of high amounts of coarse material. Such coarse material can have a maximum grain size of above 0,3 mm, or of above 1 mm, or of above 2 mm or even of above 3 mm. This means, without limitation, that a suitable coarse material can have a grain size distribution e.g. between 0 to 0,3 mm, or 0 to 1 mm, or 0 to 2 mm, or 0 to 3 mm, respectively.

The present invention is also particularly useful in printing materials with poor flowability, e.g. materials with a Hausner ratio H > 1.25 or even H > 1.35. The materials to be printed may include ceramics or especially refractory materials such as alumina, zirconia, silicon carbide or magnesia based refractory materials.

For coarse grain size distributions, such as when having a maximum grain size fraction of above 0,3 mm, or above 1 mm or even of above 2 mm, the targeted layer thicknesses are also strongly increased compared to the case of printing fine powders, as the maximum sized grains must fit into the layer thickness. Such coarse materials are selected for applications, where large parts are to be manufactured in a reasonable time. Therefore, also the material consumption can be higher, which necessitates large material reservoirs.

One important aspect in printing coarse or poor flowable materials is the homogeneity of the applied layers. It was found that using the concept of conventional recoaters leads to segregation (de-mixing) of the grain size distribution during application, as large particles generally tend to "swim up", while finer grains tend to accumulate at the bottom of the applied layers. For materials of poor flowability, conventional recoaters do not achieve layers of sufficient homogeneity. Segregation and inhomogeneity lead to mechanical weaknesses of the printed parts, as the grain size distribution differs from the targeted optimum grain size distribution and even varies along the build direction.

Another aspect is, that for an efficient 3D printing of mechanically stable parts of coarse material, it is important to obtain highly homogenous (uniform) layers of material while simultaneously having a large material reservoir (e.g. larger than double the build volume, e.g. larger than 0.01 or 0.05 m³).

Therefore, it is an object of the invention to provide a recoater for a three-dimensional (3D) printer, a three-dimensional printer and a process for three-dimensional printing, especially for manufacturing of parts using a coarse material, whereas the application of a layer of material ("recoating") yields in a layer with improved homogeneity. In other words, for printing of coarse materials, a demixing of different grain size fractions of the material during recoating is reduced. It is a further object of the invention to provide a recoater for a three-dimensional (3D) printer, a three-dimensional printer and a process for three-dimensional printing, for manufacturing of parts showing increased mechanical strength.

The object is achieved by a recoater for a three-dimensional (3D) printer according to claim 1, a three-dimensional printer according to claim 6, use of the inventive recoater or three-dimensional printer according to claim 7 and a method for three-dimensional printing according to claim 8. The advantages and refinements mentioned in connection with the method also apply analogously to the products / physical objects and vice versa.

The core idea of the invention is based on the finding, that for good mechanical properties, homogenous layers need to be achieved, especially for coarse or poorly flowing materials. Segregation / de-mixing of a coarse material during application of a layer (e.g. during the step of recoating) must be reduced or avoided, which also means that any pushing or active spreading of the coarse material must be reduced or avoided during recoating. Also, any phases of material falling under the force of gravity or otherwise accelerated to increased velocities must be minimized. In other word, there should be minimum acceleration phases during application.

In the following, all terms used relating to the 3D printing technology are chosen according to the international standard ISO/ASTM 52900:2015(en).

In a first embodiment of the invention, the object is achieved by providing a recoater for a three-dimensional printer for fabricating a part from a material, especially a coarse refractory material, comprising:
- a material reservoir with an opening for release of a material contained within the material reservoir;
- a belt conveyor system with a conveyor belt with a top surface of the conveyor belt;
- the belt conveyor system is adapted to receive the material via the opening from the material reservoir onto the top surface of the conveyor belt, such that a layer of coarse material is formed on the top surface of the conveyor belt, e.g. when the top surface of the conveyor belt is moved (e.g. horizontally, or with a horizontal component or otherwise) relatively to the position of the material reservoir;
- whereas the belt conveyor system can be moved relatively with respect to the position of the material reservoir, preferably between a first and second location, whereas this movement at least comprises a horizontal component.

The material reservoir can generally be a reservoir of a certain volume, being able to receive a (coarse) material to be printed, e.g. a coarse refractory or ceramic material with a certain grain size distribution or a powder with poor flowability. For an exemplary coarse material the grain size distribution can be such that the maximum grain size is larger than 0,3 mm or 1 mm or 2 mm or even 3 mm. The material reservoir generally comprises an opening, e.g. at the bottom side of the reservoir, where the material can be released from the reservoir to the outside. This opening can be an elongated opening, e.g. of a chosen length that corresponds to or is larger than the width of the build surface of a 3D printer.

The belt conveyor system generally comprises a conveyor belt as an endless loop carrying medium that rotates around generally two pulleys or drums. The at least two pulleys or drums are arranged in a horizontal distance from each other. In the region between the two pulleys there will be an upper and a lower part of the conveyor belt. In operation the upper and the lower part of the conveyor belt will run into opposite directions. The top surface of the conveyor belt is the outer surface of the conveyor belt in the upper part of the conveyor system. Any material falling under the force of gravity onto the conveyor belt will fall onto this top surface.

The conveyor system is adapted to receive material from the reservoir. The top surface of the conveyor system in proximity of the opening or even partially or totally in direct contact with the opening. When the top surface of the conveyor belt is moved, e.g. with a horizontal component, relatively to the material reservoir / the opening of the material reservoir, material is extracted via the opening from the reservoir and deposited in a layered form onto the top surface of the conveyor belt. It was found that this layer of material on the conveyor belts top surface shows good homogeneity (that is low density variation and low thickness variation, and also no or low segregation or de-mixing of coarse and fine particles) of the material to be printed.

The whole belt conveyor system (including the drums / pulleys and the conveyor belt as a whole) can be moved relatively to the material reservoir, especially the belt conveyor system can be moved relatively with respect to the position of the material reservoir between a first and second location, whereas this movement at least comprises a horizontal component. This moveable belt conveyor system allows e.g. to bring and even move the top surface of the conveyor belt over the build surface. Thereby also the uniform layer on the top surface of the conveyor belt can be moved e.g. over the build surface. The material reservoir can remain at a fixed position, while the material can be brought to a chosen location and then deposited at this chosen location. As during operation no movement of the reservoir is necessary, this allows to have a sufficiently large material reservoir without the need of frequent refilling of such a reservoir. This recoater allows to apply a high volume of coarse materials to the build area, while maintaining the desired grain size distribution and avoiding any segregation.

In another embodiment the belt conveyor system can be moved between a first and second location (e.g. such as a loading and unloading zone). Such a movement can at least comprise a horizontal component or be purely horizontally.

In other words, the first and second locations are locations that are at least horizontally spaced apart.

In a further embodiment the layer of material deposited on the top surface of the conveyor belt can be positioned over an unloading zone, e.g. the unloading zone being defined as the build surface of a three-dimensional printer. This positioning can be achieved by moving the belt conveyor system and / or the top surface of the conveyor belt. Thereby it is possible to transfer the homogenous / uniform layer previously received on the top surface of the conveyor belt onto the unloading zone, e.g. the build surface. One way of transferring this layer is for example to move the end of the belt conveyor system to the end of the build area and then start to retract the belt conveyor system over the build area and simultaneously move the top surface of the conveyor belt into the opposite direction of this retraction by rotating the pulleys, such that the material on the top surface of the conveyor belt is deposited over the unloading zone.

In another embodiment the material reservoir is on a fixed location and the belt conveyor system can be moved to a first location, such as a loading zone, and over a second location, such as an unloading zone, wherein the first position is defined such, that the top surface of the conveyor belt can receive material via the opening from the material reservoir.

In a further embodiment the belt conveyor system is positioned such that the top surface of the conveyor belt can receive material via the opening from the material reservoir, and a gap is formed in between the material reservoir and the top surface of the conveyor belt, whereas the gap defines the thickness of the layer of material received on the top surface of the conveyor belt.

In another embodiment, the recoater is configured that when the belt conveyor system is positioned such that the top surface of the conveyor belt can receive material via the opening from the material reservoir, a gap is formed in between the material reservoir and the top surface of the conveyor belt. When the top surface of the conveyor belt moves relatively to the opening (e.g. with a horizontal component), a layer of material is received on the top surface of the conveyor belt.

The gap defines the thickness of this layer of material received on the top surface of the conveyor belt.

The gap has preferably a height in a direction perpendicular to the top surface of the conveyor belt in the range of 0 to 20 mm, more preferably in the range of 0,001 to 20 mm, most preferably in the range of 2 to 10 mm.

Alternatively, the gap can be defined by an adjustable gate, preferably an electrically controllable gate. The adjustment of the size of the gap allows an easy adjustment of the thickness of the layer of material received on the top surface of the conveyor belt. An adjustable gate allows to set the gap preferably with a height in a direction perpendicular to the top surface of the conveyor belt in the range of 0 to 20 mm, preferably 0 to 10 mm. The adjustable gate preferably includes a position which closes the gate (that is 0 mm), which allows to stop receiving material onto the top surface of the conveyor belt.

In a further embodiment the belt conveyor system is positioned such that the top surface of the conveyor belt can receive material via the opening from the material reservoir, and the top surface of the conveyor belt is in contact with the bottom of the material reservoir.

The recoater may optionally comprise a support element, such as a sliding bed or a roller bed, whereas the support element supports the conveyor belt below the opening of the material reservoir, when the belt conveyor system is positioned such that the top surface of the conveyor belt can receive material via the opening from the material reservoir. This allows higher capacities of the material reservoir.

In a second aspect the invention relates to a three-dimensional printer for application of a coarse material comprising:
- a build surface;
- a printing device;
- a recoater according to the invention;
- whereas the belt conveyor system of the recoater is adapted to move over the build surface and to deposit coarse material previously received on the top surface of the conveyor belt onto the build surface, such that a layer of material can be formed on the build surface.

In another embodiment the invention relates to a three-dimensional printer for application of a coarse material comprising:
- a build surface;
- a printing device;
- a recoater comprising:
   - a material reservoir with an opening for release of a material contained within the material reservoir,
   - a belt conveyor system with a conveyor belt with a top surface of the conveyor belt,
   - the conveyor system is adapted to receive the material via the opening from the material reservoir onto the top surface of the conveyor belt, such that a layer of material is formed on the top surface of the conveyor belt, e.g. when the top surface of the conveyor belt is moved (e.g. horizontally, or in a direction with a horizontal component, or otherwise) relatively to the position of the material reservoir,
   - the belt conveyor system can be moved relatively with respect to the position of the material reservoir, preferably between a first and second location, whereas this movement at least comprises a horizontal component,
- whereas the belt conveyor system of the recoater is adapted to move over the build surface and to deposit material previously received on the top surface of the conveyor belt onto the build surface, such that a layer of material is formed on the build surface.

Preferably, the vertical distance between the top surface of the conveyor belt and the build surface can be low. Therefore, the falling height (which is half the vertical distance between the top surface of the conveyor belt and the build surface) can preferably be achieved to be lower than 50 mm, or even more preferably lower than 25 mm. In other words, the vertical distance between the top surface of the conveyor belt and the build surface can preferably be achieved to be lower than 100 mm, or even more preferably lower than 50 mm. This further reduces de-mixing of the coarse material and increases the uniformity of the applied layers.

In one embodiment the inventive recoater and / or the inventive three-dimensional printer is used for printing a refractory material.

In one embodiment the inventive recoater and / or the inventive three-dimensional printer is used for printing a coarse refractory material, with a grain size distribution comprising grains of a maximum grain size larger than 0,3 mm, or larger than 1 mm, preferably 2 mm, more preferably 3 mm. This usage allows the efficient production of large refractory parts with good mechanical properties by 3D printing.

In one embodiment the inventive recoater and / or the inventive three-dimensional printer is used for printing a coarse refractory material, the coarse refractory material comprising at least 20 weight.-% relative to the total weight of all refractory particulate matters of a refractory particulate material with a grain size of at least 1 mm. More preferably, the coarse refractory material comprises at least 10 weight.-% relative to the total weight of all refractory particulate matters of a refractory particulate material with a grain size of at least 2 mm.

In one embodiment the inventive recoater and / or the inventive three-dimensional printer is used for printing a ceramic or a refractory material in the form of a (fine) powder of poor flowability, such as a refractory powder with a Hausner ratio of H > 1.25 or preferably even H > 1.35. The Hausner ratio is defined as the ratio between the tapped density ρₜₐₚ (German: Klopfdichte) measured according to DIN EN 725-8:2006-06 and the untapped bulk density ρ_{bulk} (German: Schüttdichte) measured according to DIN EN 725-9:2006-05: H=ρₜₐₚ/ρ_{bulk}.

In a third aspect the invention relates to a process for three-dimensional printing comprising the steps:
(1) Moving a belt conveyor system in a position below the material reservoir;
(2) Receiving a material via an opening from the material reservoir onto a top surface of a conveyor belt of the belt conveyor system, such that a layer of material is formed on the top surface of the conveyor belt e.g. by moving the top surface of the conveyor belt (e.g. horizontally, or with a horizontal component or otherwise) relatively to the position of the material reservoir;
(3) Moving the belt conveyor system over a build surface of a three-dimensional printer at a first velocity V1 relative to the build surface and simultaneously moving the top surface of the conveyor belt at a second velocity V2 relative to the belt conveyor system in an opposite direction to deposit the material previously received on the top surface of the conveyor belt onto the build surface, such that a layer / at least one layer of material is formed on the build surface;
   Optionally: Repeating steps (1)-(3) above.
(4) Application of a liquid, such as a binder, by a printing device onto the layer / the at least one layer of material previously formed on the build surface;
(5) Moving downwards the build surface by a height corresponding to the thickness of the layer / of the at least one layer of material formed on the build surface;
   whereas the step of receiving a material via an opening from the material reservoir onto a conveyor belt of the belt conveyor system such that a layer of material is formed on the conveyor belt, is performed by moving the belt conveyor system relatively with respect to the position of the material reservoir.

Optionally: Repeating the steps (1)-(5) above.

The velocities of step (3) partially cancel out, such that the resulting deposition velocity of the material with respect to the build surface is reduced with respect to the velocities V1 and V2. This is achieved due to the fact that the movement of the belt conveyor system at a velocity V1 relative to the build surface is opposite to the movement of the top surface of the conveyor belt at a velocity V2 relative to the belt conveyor system. The resulting velocity of the top surface of the conveyor belt relative to the build surface is reduced.

The velocities V1 and V2 can be chosen such that the resulting velocity, or the relative horizontal velocity component of the coarse material leaving the conveyor belt and the build surface is reduced compared to any of the velocities V1 and V2.

This resulting velocity component can be even zero. This can be achieved because the relative movement of the top surface of the conveyor belt at a velocity V2 and the movement of the whole belt conveyor system at a velocity V1 at least partially or even totally cancel out. One way of such a (partial) cancelation occurs, when V1 and V2 have an opposite (horizontal) velocity component or in case V1 and V2 are exactly opposite to each other. Still this method allows to choose velocities V1 and V2 with high vertical components, leading to short layer applications times and simultaneously having low resulting relative horizontal velocity components of the deposited particles relative to the build surface, thus reducing or even eliminating segregation of different grain sizes during deposition of the material previously received on the top surface of the conveyor belt onto the build surface.

The velocities V1 and V2 can be chosen such that their absolute value is larger than 0,03 m/s or even larger than 0,06 m/s or even larger than 0,09 m/s. Therefore, in another embodiment the difference of the velocities V1 and V2 are smaller than 0.02 m/s, preferably smaller than 0.01 m/s, more preferably smaller than 0.005 m/s. Alternatively the difference of the horizontal velocities' components V1 and V2 are smaller than 0.02 m/s, preferably smaller than 0.01 m/s, more preferably smaller than 0.005 m/s. These values have shown good results and negligible segregation behavior.

In a further embodiment, in step (1), the belt conveyor system is positioned such that the top surface of the conveyor belt can receive coarse material via the opening from the material reservoir, and the top surface of the conveyor belt is in contact with the bottom of the material reservoir.

In one embodiment the step of receiving a coarse material via an opening from the material reservoir onto the top surface of the conveyor belt of the belt conveyor system such that a layer of coarse material is formed on the top surface of the conveyor belt, is performed by moving the (whole) belt conveyor system relatively with respect to the position of the material reservoir. According to the invention, the belt conveyor system is moved relatively with respect to the position of the material reservoir between a first and second location, whereas this movement at least comprises a horizontal component.

In an alternative embodiment the step of receiving a coarse material via an opening from the material reservoir onto a top surface of the conveyor belt of the belt conveyor system, such that a layer of coarse material is formed on the top surface of the conveyor belt, is performed by moving the top surface of the conveyor belt relatively with respect to the position of the material reservoir, e.g. through rotation of the pulleys / drums.

In another alternative embodiment the step of receiving a coarse material via an opening from the material reservoir onto a top surface of the conveyor belt of the belt conveyor system such that a layer of coarse material is formed on the top surface of the conveyor belt, is performed by moving the (whole) belt conveyor system relatively with respect to the position of the material reservoir, preferably this movement at least comprises a horizontal component, and by moving the top surface of the conveyor belt relatively with respect to the position of the material reservoir through rotation of the pulleys / drums.

In another embodiment the coarse material is a coarse grain material with a maximum grain size of larger than 0,3 mm, preferably larger than 1 mm, preferably larger than 2 mm.

Preferably the gate is adapted to the grain size distribution of the coarse material. E.g. the gap should be adapted such, that the maximum grain size in the distribution can pass through the gate to prevent blockage of the gate.

In one embodiment the gate is adapted such that the gap has a height in a direction perpendicular to the top surface of the conveyor belt of at least double the value of the maximum grain size of the coarse material.

In another embodiment, the at least one layer of material formed on the build surface can be further smoothed. Preferably the smoothing is done by using a blade.

In another embodiment, the at least one layer of material formed on the build surface can be compacted. Preferably the compacting is done by using a roller.

In another embodiment, the application of a liquid by a printing device onto the at least one layer of material previously formed on the build surface to achieve a binding effect of the material is achieved by providing the liquid through a nozzle of the printing head. The three-dimensional printer can further comprise a pump for providing the liquid to the printing head. The pump can preferably be a peristaltic pressure pump.

In another embodiment the liquid to achieve a binding effect of the material can be a liquid binder, such as a resin, especially an epoxy resin, or a (molten) wax.

In another embodiment the liquid to achieve a binding effect of the material can be water, or a water-based suspension containing solid particles.

In another embodiment the liquid to achieve a binding effect of the material can be an alcohol or a sol.

The binding effect can be achieved by the interaction of the liquid with the refractory batch.

In another embodiment the achieved printed part can be dried, e.g. in a temperature range of 100°C to 150°C.

In another embodiment the achieved printed part can be treated to remove any unbound material, e.g. with the help of a gas stream such as compressed air or manually, e.g.with a brush.

In another embodiment the achieved part can be heat treated at elevated temperature, such as e.g. in a temperature range above 1200°C, e.g. of 1500°C to 1650°C for at least 1 hour.

Exemplary embodiments of the invention are explained in more detail by means of illustrations:
Fig. 1 is a schematic perspective view of a 3D printer embodiment.
Fig. 2 shows a schematic side view of the operation of a recoater embodiment for a 3D printer.
Fig. 3 shows a schematic side view of the operation of a recoater alternative embodiment for a 3D printer.
Fig. 4 shows a schematic side view section of the recoater embodiment.
Fig. 5 shows a photo of a printed exemplary sample.

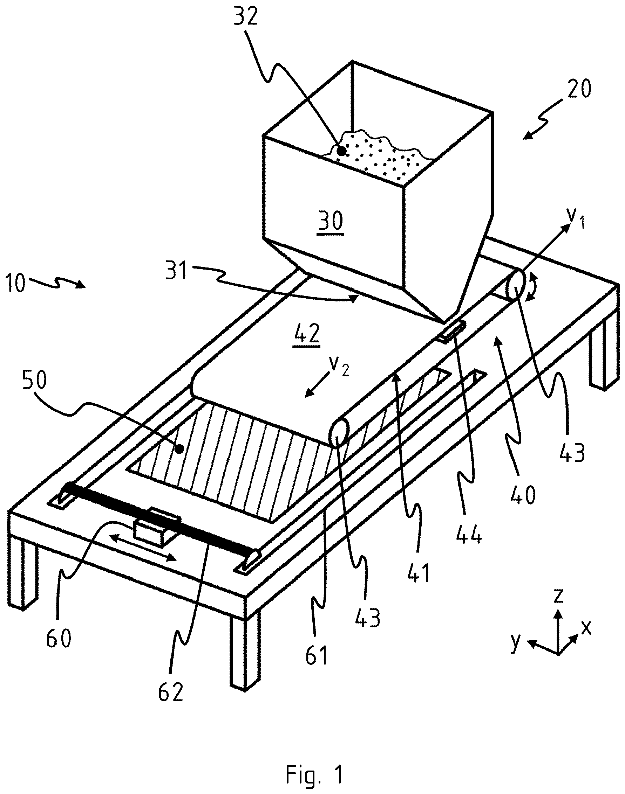

Fig. 1 shows a schematic perspective view of a 3D printer (10) embodiment. The printer (10) includes a recoater (20) comprising a material reservoir (30) with a coarse material (32) received inside the reservoir (30), and with an opening (31) for release of the coarse material (32). The printer (10) further includes a belt conveyor system (40) with a conveyor belt (41) with a top surface (42) of the conveyor belt (41) and two pulleys / drums (43). The conveyor belt (41) is an endless loop carrying medium that rotates around the pulleys / drums (43). The upper part of the conveyor belt (41) is arranged below the opening (31) and above the support element (44). While the belt conveyor system (40) is shown in an horizontal configuration (that means that the two pulleys / drums (43) are at a same height, that is have the same z-coordinate), generally the belt conveyor system (40) could be in a different angled configuration, e.g. where the pulleys / drums (43) would be arranged at a different height / z-coordinate (not shown in the figures). The printer (10) further comprises a build surface (50) and a printing device (60). In this embodiment the material reservoir (30) is at a fixed location. Alternatively, the material reservoir (30) could be movable for replacement or for refilling of the material reservoir (30). The belt conveyor system (40) can move along the x-axes and is fixed on the y- and z- coordinate. The conveyor belt (41) can be moved around the pulleys / drums (43) such that the top surface (42) of the conveyor belt (41) can move along the x-axes independently of and additionally to the movement of the belt conveyor system (40). The build platform (50) can move along the z-axis and is fixed on the x- and y- coordinate. The printing device (60) can move along the x- and y- axes and is fixed on the z- coordinate. Means (61) for movement of the printing device (60) along the x-axes and means (62) for movement of the printing device (60) along the y-axes can be e.g. linear rails or rods.

During operation of the printer (10), the recoater (20) deposits at least one layer (34) of a coarse material (32) onto the build surface (50), then the printing device (60) is moved to specified x- and y coordinates by means (61, 62) for movement of the printing device (60) to apply a binder onto the previously deposited uppermost layer / layers (34), thereby imposing an image forming a slice of the part to be manufactured. Subsequently the floor of the build box is lowered, that is the z-coordinate of the build surface is decreased, to receive the next layer / layers (34). These steps are repeated until the whole part or parts are finished.

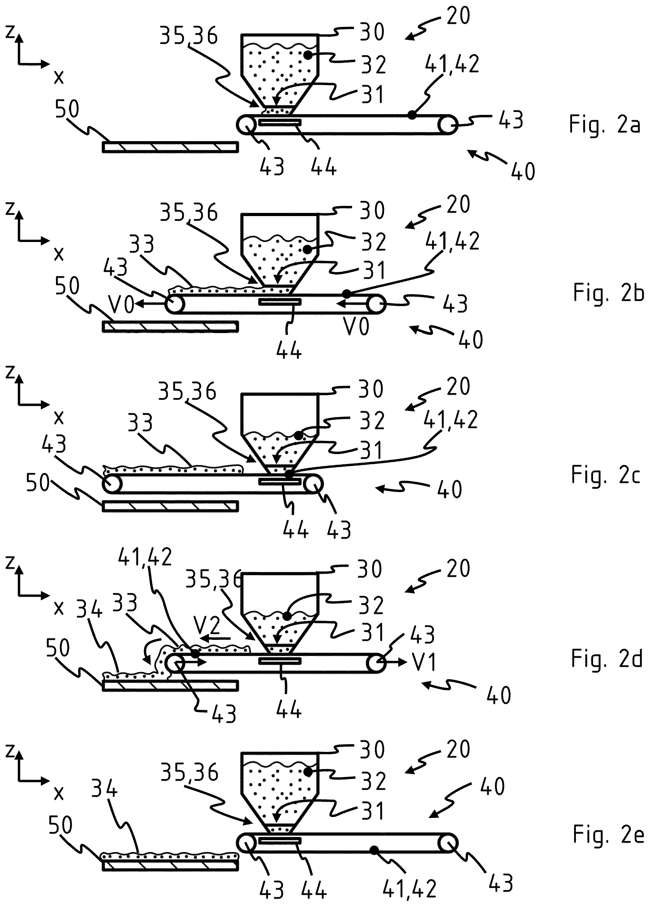

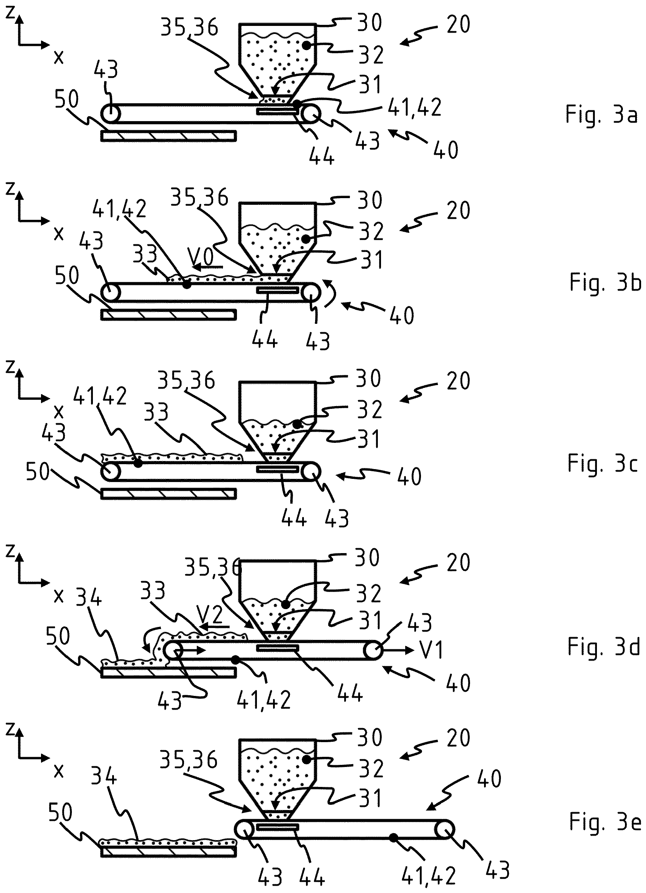

Fig. 2 and 3 show a schematic side view of the operation of two recoater embodiments (20) for a 3D printer (10). Here a belt conveyor system (40) with a conveyor belt (41) and its top surface (42) and two conveyor pulleys / drums (43) are shown. Also, the material reservoir (30) with a coarse material (32) and its opening (31) with a gap (35) and a gate (36) are shown, as well as a build surface (50) of a 3D printer (10). A support element (44) is placed below the opening (31) and the top surface (42) of the conveyor belt (41) to support the weight of the coarse material (32) in the reservoir (30). The support element (44) can extend solely below the material reservoir (30) (as shown in the figures) or alternatively the support element (44) can extend along substantially the full length of the top surface (42) of the conveyor belt (41). The material reservoir (30) of this embodiment has a volume of 0.05 m³.

In Fig. 2a the belt conveyor system (40) is positioned at a first location (the loading zone), in that the top surface (42) of the conveyor belt (41) can receive coarse material (32) via the opening (31) from the material reservoir (30). The conveyor belt (41) is fixed with respect to the belt conveyor system (40) and the whole belt conveyor system (40) is moved relatively to the fixed position of the material reservoir (30). In this embodiment this implies a movement of the top surface (42) relative to the opening (31) along the negative x-axes (here that is in a horizontal direction) at a velocity V0 (that is with a velocity *̅v̅*̅ = (-70; 0; 0) with an absolute value of |*̅v̅*̅| = *V*0). As shown in Fig. 2b, by this movement, a layer (33) of coarse material (32) is formed on the top surface (42) of the conveyor belt (41). When the desired length of the layer (33) is reached, the gate (36) can be closed. In Fig. 2c, the belt conveyor system (40) is moved, such that the layer (33) of coarse material (32) is positioned at / over a second location (the unloading zone). In Fig. 2d, the belt conveyor system (40) is moved over the build surface (50), in this embodiment this movement is along the positive x-axes (here that is in a horizontal direction) at a velocity V1 relative to the build surface (50) (that is with a velocity *̅v̅*̅ = (Vl; 0; 0) with an absolute value of |*̅v̅*̅| = 71). Simultaneously the conveyor belt (41) is moved due to a rotation of the pulleys / drums (43). The top surface (42) is moved along the negative x-axes at a velocity V2 relative to the belt conveyor system (40). This leads to a deposition of the coarse material (32) previously received on the top surface (42) of the conveyor belt (41). The top surface (42) moves at a velocity of *̅v̅*̅ = (V1 - V2; 0; 0) (with an absolute value of |*̅v̅*̅| = |*V*1 - *V*2|) relative to the build surface (50) along the x-axes. In this embodiment V1 and V2 was set to 0,035 m/s, the difference of the horizontal components V1 and V2 is 0 (that is the top surface (42) of the conveyor belt (41) does not move with respect to the build surface (so *̅v̅*̅ = (0; 0; 0) with an absolute value of |*̅v̅*̅| = 0)). In alternative embodiments small differences of V1 and V2 of up to 0,01 m/s or 0,005 m/s are acceptable (|*̅v̅*̅| = |*V*1 - *V*2| < 0,01 m/s or |*̅v̅*̅| = |*V*1 - *V*2| < 0,005 m/s). The falling height (which is half the vertical distance between the top surface (42) of the conveyor belt (41) and the build surface (50)) in this embodiment was 24 mm. The vertical distance between the top surface (42) of the conveyor belt (41) and the build surface (50) was 48 mm. Optionally the deposited coarse mixture (30) can be smoothed with a blade. Optionally the deposited coarse mixture (30) can be compacted with a roller.

In Fig. 3a the belt conveyor system (40) is positioned at a first location (the loading zone), in that the top surface (42) of the conveyor belt (41) can receive coarse material (32) via the opening (31) from the material reservoir (30). The whole belt conveyor system (40) is fixed and the top surface (42) of the conveyor belt (41) is moved (due to a rotation of the pulleys / drums (43)) relatively with respect to the position of the material reservoir (30). In this embodiment this implies a movement of the top surface (42) relative to the opening (31) along the negative x-axes at a velocity V0 (that is with a velocity *̅v̅*̅ = (-70; 0; 0) with an absolute value of |*̅v̅*̅| = *V*0). As shown in Fig. 3b, a layer (33) of coarse material (32) is formed on the top surface (42) of the conveyor belt (41). When the desired length of the layer (33) is reached, the gate (36) can be closed. In Fig. 3c, the top surface (42) of the conveyor belt (41) is moved such that the layer (33) of coarse material (32) is positioned at / over a second location (the unloading zone). In Fig. 3d, the belt conveyor system (40) is moved over the build surface (50), in this embodiment this movement is along the positive x-axes (here that is in a horizontal direction) at a velocity V1 relative to the build surface (50) (that is with a velocity *̅v̅*̅ = (V1; 0; 0) with an absolute value of |*̅v̅*̅| = 71). Simultaneously the conveyor belt (41) is moved due to a rotation of the pulleys / drums (43). The top surface (42) is moved along the negative x-axes at a velocity V2 relative to the belt conveyor system (40). This leads to a deposition of the coarse material (32) previously received on the top surface (42) of the conveyor belt (41). The top surface (42) moves at a velocity of *̅v̅*̅ = (V1 - V2; 0; 0) (with an absolute value of |*̅v̅*̅| = |*V*1 - *V*2|) relative to the build surface (50) along the x-axes. In this embodiment the difference of the horizontal components V1 and V2 is 0 (that is the top surface (42) of the conveyor belt (41) does not move with respect to the build surface (so *̅v̅*̅ = (0; 0; 0) with an absolute value of |*̅v̅*̅| = 0)). In the present embodiment the velocities are chosen as V1=V2= 0,035 m/s. In alternative embodiments small differences of V1 and V2 of up to 0,01 m/s or 0,005 m/s are acceptable (|*̅v̅*̅| = |*V*1 - *V*2| < 0,01 m/s or |*̅v̅*̅| = |*V*1 - *V*2| < 0,005 m/s).

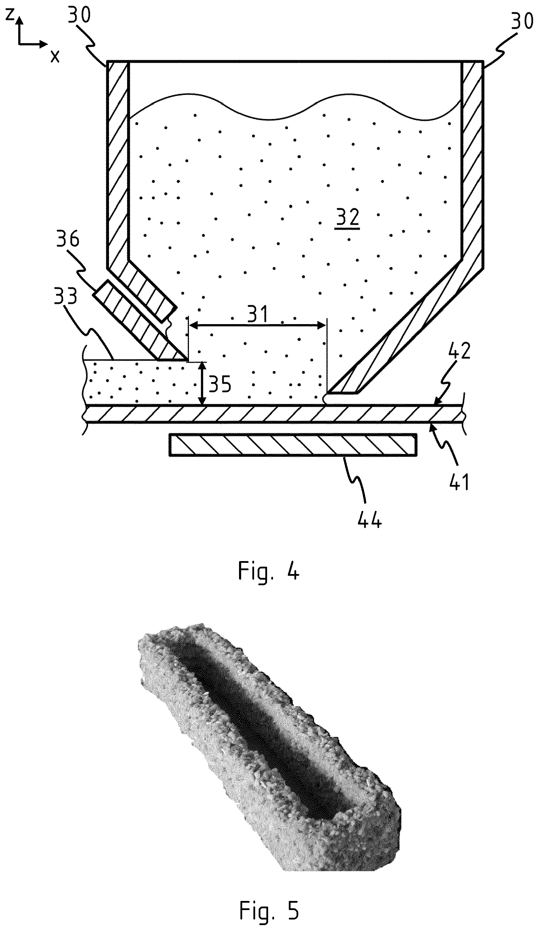

Fig. 4 shows a schematic side view section of a recoater embodiment. The recoater (20) comprises a material reservoir (30) for reception of a coarse material (32) with an opening (31) for release of a coarse material (32) onto the top surface (42) of a conveyor belt (41). The conveyor belt (41) is supported by an optional support element (44). A gap (35) is formed in between the material reservoir (30) (here on one side of the reservoir (30)) and the top surface (42). The height of the gap (35) can be adjusted by the adjustable gate (36). The gate (36) can be a manually adjustable gate (36) or preferably an electrically controllable gate (36) (not shown). The height of the gap (35) measured perpendicular to the top surface (42) in this embodiment can be adjusted in the range of 0 mm to 20 mm. In this embodiment, the height of the gap (35) measured perpendicular to the top surface (42) is set to 6 mm. The height of the gap (35) measured perpendicular to the top surface (42) defines the thickness of the layer (33) of coarse material (32) formed on the top surface (42) of the conveyor belt (41).

In one exemplary setup the conveyor belt system (40) has a width of 500 mm (0.5 m) and a length of 1000 mm (1 m). The material reservoir (30) is fixed (non-moveable) and has a square dimension of 300 mm (0.3 m) times 300 mm (0.3 m), and a height of 200 mm (0.2 m), thus a volume of 0.018 m³. The build surface (50) has a base area of 280 mm (0.28 m) times 280 mm (0.28 m) and could be moved along the (vertical) z-axis (e.g. down) by 200 mm (0.2 m).

In one example, the following coarse material (30) was used for printing a refractory part. The coarse material (30) was achieved by providing the following refractory ceramic batch:

| **Supplier** | **Material** | **Type** | **weight.-%** |
|---|---|---|---|
| Almatis | Tabular Alumina | 1-3 mm | 35 |
| Imerys | Fused Alumina | 0,5-1 mm | 21 |
| Imerys | Fused Alumina | 0-0,5 mm | 18 |
| Imerys | Fused Alumina | 0-0,1 mm | 10 |
| Almatis | Calcined Alumina | CTC 40 | 16 |

The weight.-% in the above table demote the weight percentage of the individual components relative to the total weight of the refractory ceramic batch, without any binders or liquids added.

Potato dextrin powder was added as a binder to the refractory ceramic batch of the table above at 10 weight.-% relative to the total weight of the refractory ceramic batch without the potato dextrin powder. The potato dextrin powder had an average grain size of 115 µm, (material source: Superior yellow F, Südstärke, Schrobenhausen, Germany).

The coarse material (32), being the mixture of the refractory ceramic batch and the potato dextrin powder, was filled into the material reservoir (30). The gate (36) at the bottom of the material reservoir (30) was set to a gap (35) of 6 mm. The build surface was lowered by 5 mm. The whole belt conveyor system (40) was moved (while the conveyor belt (41) was fixed with respect to the belt conveyor system) under the material reservoir (30) in the direction of the build surface (50) according to Fig. 2b to 2c, thereby receiving the coarse material (32) and depositing a layer (33) of this coarse material (32) onto the top surface (42) of the conveyor belt (41). After the layer (33) was deposited onto the top surface (42) and the build surface (50) had been crossed by the belt conveyor system (40), the conveyor belt (41) started to move through a rotation of the pulleys / drums (43), while simultaneously the belt conveyor system (40) was retracted according to Fig. 2d. The relative velocity of the conveyor belt (41) to the belt conveyor system (40) and the velocity of the belt conveyor system (40) were chosen such that the resulting velocity of the top surface (42) relative to the build surface (50) was less than v=0,002 m/s. This caused the coarse material (30) to be deposited on the build surface (see Fig. 2e). The deposited coarse mixture (30) was smoothed with a blade.

A water-based suspension with 40 mass percent alumina (CT 3000, Almatis) and 0,6 % dispersing additive (Dolapix CE64, Zschimmer & Schwarz Chemie GmbH, Lahnstein, Germany) was produced in a drum mill.

Using a CAD program, a rod-shaped body (40 x 40 x 250 mm) was designed for the purpose of sample preparation. The data set was sliced using the open-source software Slic3r in layers of 5 mm.

The printing device (60) comprised a nozzle with a diameter of 0.4 mm which was used to apply the suspension. A peristaltic pump was used to convey the suspension to the nozzle of the printing device (60). The speed of the peristaltic pump was set to produce a continuous jet of suspension. The printing device (60) with the nozzle could be moved with the help of means (61) for movement of the printing device (60) along the x-axes and means (62) for movement of the printing device (60) along the y-axes. This was achieved by using X/Y linear units. The control was done by the open-source software Repetier Host.

The printing head (60) - and thus the nozzle - was moved in such a way that the suspension was applied to the build surface (50) and thus the "powder bed" according to the contour or surface intended for the test specimen (e.g. as defined in the sliced data set relating to the actual height of the sample to be printed). After finishing the addition of the suspension in the actual slice of the sample, the build surface (50) was lowered by 5 mm along the z-axis and the next slice (layer) of coarse material (30) was applied.

After printing the last slice / layer of coarse material (30), the printing was finished. The overall printing time was 150 seconds.

Then the build surface (50) was raised up to its original starting position and the entire "powder bed" could be removed, that means that all the coarse material (30) where no suspension was added, was removed and only the coarse material (30) where the suspension was added, remained ("printed sample"). Each of the so achieved printed samples were dried at 110°C for 12 hours. Then these printed samples were removed and dried at 110°C for a further 12 hours. The dried samples were then cleaned of any remaining unbound powder with a brush and compressed air. A further step of sintering of the specimens took place at 1600°C, with 2 h holding time.

The designed rod-shaped bodies were printed using the refractory ceramic batch as described above and yielded squared bars (40 x 40 x 250 mm) as specimens for evaluation of the mechanical properties. The obtained specimens reproducibly achieved a cold bending strength according to the 3-point test in the range of 6 to 8 MPa. The achieved samples showed good homogeneity in the z-direction. No layer formation was visible in the microstructure.

An exemplary printed sample with a more complex geometry (of tub like shape) was produced and is shown in Fig. 5.

List of reference numerals and factors:
- 10: Three dimensional printer (3D-printer)
- 20: Recoater
- 30: Material reservoir
- 31: Opening
- 32: Coarse material
- 33: Layer of coarse material (32) on conveyor belt (41)
- 34: Layer of coarse material (32) on powder bed (50)
- 35: Gap
- 36: Gate
- 40: (moveable) Belt conveyor system
- 41: Conveyor belt
- 42: Top surface of conveyor belt
- 43: Conveyor pulley
- 44: Support element (sliding bed, roller bed)
- 50: Build surface
- 60: Printing device
- 61: Means for movement of printing device (60) along x-axes
- 62: Means for movement of printing device (60) along y-axes
- V0, V1: Velocity of belt conveyor system (40)
- V2: Velocity of conveyor belt (41) relative to conveyor system (40)

## Claims

1. A recoater (20) for a three-dimensional printer (10) for application of a material (32) comprising:
1.1 a material reservoir (30) with an opening (31) for release of a material (32) contained within the material reservoir (30);
1.2 a belt conveyor system (40) with a conveyor belt (41) with a top surface (42) of the conveyor belt (41);
1.3 the belt conveyor system (40) is adapted to receive the material (32) via the opening (31) from the material reservoir (30) onto the top surface (42) of the conveyor belt (41), such that a layer (33) of material (32) can be formed on the top surface (42) of the conveyor belt (41);
1.4 whereas the belt conveyor system (40) can be moved relatively with respect to the position of the material reservoir (30) between a first and second location, **characterized in that** this movement at least comprises a horizontal component.

2. A recoater (20) according to the previous claims, whereas the material reservoir (30) is on a fixed location and the belt conveyor system (40) can be moved to a first location, such as a loading zone, and over a second location, such as an unloading zone, wherein the first position is defined such, that the top surface (42) of the conveyor belt (41) can receive material (32) via the opening (31) from the material reservoir (30).

3. A recoater (20) according to the previous claims, that when the belt conveyor system (40) is positioned such that the top surface (42) of the conveyor belt (41) can receive material (32) via the opening (31) from the material reservoir (30), a gap (35) is formed in between the material reservoir (30) and the top surface (42) of the conveyor belt (41), whereas when the top surface (42) of the conveyor belt (41) moves relatively to the opening (31), a layer (33) of material (32) can be received on the top surface (42) of the conveyor belt (41) and the gap (35) defines the thickness of the layer (33) of material (32) received on the top surface (42) of the conveyor belt (41).

4. A recoater (20) according to the previous claims, wherein the gap (35) has a height in a direction perpendicular to the top surface (42) of the conveyor belt (41) in the range of 0,001 to 20 mm, preferably in the range of 2 to 10 mm.

5. A recoater (20) according to the previous claims, wherein the gap (35) is defined by an adjustable gate (36), preferably an electrically controllable gate (36).

6. A three-dimensional printer (10) for application of a material (32) comprising:
6.1 a build surface (50);
6.2 a printing device (60);
6.3 a recoater (20) according to any of the previous claims;
6.4 whereas the belt conveyor system (40) of the recoater (20) is adapted to move over the build surface (50) and to deposit material (32) previously received on the top surface (42) of the conveyor belt (41) onto the build surface (50), such that a layer (34) of material (32) can be formed on the build surface (50).

7. Use of a recoater (20) according to any of the claims 1 to 5 or a three-dimensional printer according to claim 6 for printing of a coarse refractory material with a maximum grain size larger than 0.3 mm, preferably larger than 1 mm, more preferably larger than 2 mm.

8. A method for three-dimensional printing comprising the steps:
8.1 Moving a belt conveyor system (40) to a position below a material reservoir (30);
8.2 Receiving a material (32) via an opening (31) from the material reservoir (30) onto a top surface (42) of a conveyor belt (41) of the belt conveyor system (40), such that a layer (33) of material (32) is formed on the top surface (42) of the conveyor belt (41);
8.3 Moving the belt conveyor system (40) over a build surface (50) of a three-dimensional printer (10) at a velocity V1 relative to the build surface (50) and simultaneously moving the top surface (42) of the conveyor belt (41) at a velocity V2 relative to the belt conveyor system (40) to deposit the material (32) previously received on the top surface (42) of the conveyor belt (41) onto the build surface (50), such that at least one layer (34) of material (32) is formed on the build surface (50), whereas the velocities V1 and V2 at least partially cancel out such that the resulting velocity of the top surface (42) of the conveyor belt (41) relative to the build surface (50) is reduced with respect to any of the velocities V1 and V2;
8.4 Application of a liquid by a printing device (60) onto the at least one layer of material (32) previously formed on the build surface (50) to achieve a binding effect of the material (32);
8.5 Moving downwards the build surface (50) by a height corresponding to the thickness of the at least one layer of material (32) formed on the build surface (50);
8.6 whereas the step of receiving a material (32) via an opening (31) from the material reservoir (30) onto a conveyor belt (41) of the belt conveyor system (40) such that a layer (33) of material (32) is formed on the conveyor belt (41), is performed by moving the belt conveyor system (40) relatively with respect to the position of the material reservoir (30) , whereas the belt conveyor system (40) is moved relatively with respect to the position of the material reservoir (30) between a first and second location, whereas this movement at least comprises a horizontal component.

9. A method for three-dimensional printing according to the claim 8, whereas the difference of the velocities V1 and V2 corresponds to the resulting velocity of the top surface (42) of the conveyor belt (41) relative to the build surface (50) and this resulting velocity is smaller than 0.02 m/s, preferably smaller than 0.01 m/s, more preferably smaller than 0.005 m/s.

10. A method for three-dimensional printing according to claim 8 to 9, whereas the step of receiving a material (32) via an opening (31) from the material reservoir (30) onto a conveyor belt (41) of the belt conveyor system (40) such that a layer (33) of material (32) is formed on the conveyor belt (41), is performed by moving the top surface (42) of the conveyor belt (41) relatively with respect to the position of the material reservoir (30).

11. A method for three-dimensional printing according to claims 8 to 10 whereas the material (32) is a coarse grain material, such as a refractory material, with a maximum grain size of larger than 0,3 mm, preferably larger than 1 mm, preferably larger than 2 mm.

12. A method for three-dimensional printing according to claims 8 to 11, whereas the gate (36) is adapted to the grain size distribution of the material (32), preferably adapted such that the gap (35) has a height in a direction perpendicular to the top surface (42) of the conveyor belt (41) of at least double the value of the maximum grain size of the material (32).

13. A method for three-dimensional printing according to claims 8 to 12, using a recoater (20) according to claims 1 to 5 and / or a three-dimensional printer according to claim 6.

## Patentansprüche

1. Recoater (20) für einen dreidimensionalen Drucker (10) zum Auftragen eines Materials (32), umfassend:
1.1 ein Materialreservoir (30) mit einer Öffnung (31) zur Ausbringung eines in dem Materialreservoir (30) enthaltenen Materials (32);
1.2 ein Förderbandsystem (40) mit einem Förderband (41) mit einer Oberseite (42) des Förderbandes (41);
1.3 das Förderbandsystem (40) ist dazu ausgebildet, das Material (32) über die Öffnung (31) aus dem Materialreservoir (30) auf die Oberseite (42) des Förderbandes (41) aufzunehmen, so dass eine Schicht (33) aus Material (32) auf der Oberseite (42) des Förderbandes (41) gebildet werden kann;
1.4 wobei das Förderbandsystem (40) relativ zur Position des Materialreservoirs (30) zwischen einem ersten und einem zweiten Ort bewegt werden kann, **dadurch gekennzeichnet, dass** diese Bewegung zumindest eine horizontale Komponente umfasst.

2. Recoater (20) nach einem der vorhergehenden Ansprüche, wobei sich das Materialreservoir (30) an einem festen Ort befindet und das Förderbandsystem (40) zu einem ersten Ort, wie z.B. einer Ladezone, und über einen zweiten Ort, wie z.B. eine Entladezone, bewegt werden kann, wobei die erste Position so definiert ist, dass die Oberseite (42) des Förderbandes (41) Material (32) über die Öffnung (31) aus dem Materialreservoir (30) aufnehmen kann.

3. Recoater (20) nach den vorhergehenden Ansprüchen, dass, wenn das Förderbandsystem (40) so positioniert ist, dass die Oberseite (42) des Förderbandes (41) Material (32) über die Öffnung (31) aus dem Materialreservoir (30) aufnehmen kann, ein Spalt (35) zwischen dem Materialreservoir (30) und der Oberseite (42) des Förderbandes (41) gebildet wird, wobei, wenn sich die Oberseite (42) des Förderbandes (41) relativ zur Öffnung (31) bewegt, eine Schicht (33) von Material (32) auf der Oberseite (42) des Förderbandes (41) aufgenommen werden kann und der Spalt (35) die Dicke der auf der Oberseite (42) des Förderbandes (41) aufgenommenen Schicht (33) von Material (32) definiert.

4. Recoater (20) nach einem der vorhergehenden Ansprüche, wobei der Spalt (35) in einer Richtung senkrecht zur Oberseite (42) des Förderbandes (41) eine Höhe im Bereich von 0,001 bis 20 mm, vorzugsweise im Bereich von 2 bis 10 mm, aufweist.

5. Recoater (20) nach einem der vorhergehenden Ansprüche, wobei der Spalt (35) durch eine einstellbare Öffnung (36), vorzugsweise eine elektrisch steuerbare Öffnung (36), definiert ist.

6. Dreidimensionaler Drucker (10) zum Auftragen eines Materials (32), der folgendes umfasst:
6.1 eine Baufläche (50);
6.2 eine Druckvorrichtung (60);
6.3 einen Recoater (20) nach einem der vorhergehenden Ansprüche;
6.4 wobei das Förderbandsystem (40) des Recoaters (20) so ausgelegt ist, dass es sich über die Baufläche (50) bewegt und Material (32), das zuvor auf der Oberseite (42) des Förderbandes (41) aufgenommen wurde, auf der Baufläche (50) ablagert, so dass eine Schicht (34) aus Material (32) auf der Baufläche (50) gebildet werden kann.

7. Verwendung eines Recoaters (20) nach einem der Ansprüche 1 bis 5 oder eines dreidimensionalen Druckers nach Anspruch 6 zum Drucken eines grobkörnigen feuerfesten Materials mit einer maximalen Korngröße größer als 0,3 mm, vorzugsweise größer als 1 mm, besonders bevorzugt größer als 2 mm.

8. Ein Verfahren zum dreidimensionalen Drucken, das die folgenden Schritte umfasst:
8.1 Bewegen eines Förderbandsystems (40) in eine Position unterhalb eines Materialreservoirs (30);
8.2 Aufnehmen eines Materials (32) über eine Öffnung (31) aus dem Materialreservoir (30) auf eine Oberseite (42) eines Förderbandes (41) des Förderbandsystems (40), so dass eine Schicht (33) aus Material (32) auf der Oberseite (42) des Förderbandes (41) gebildet wird;
8.3 Bewegen des Förderbandsystems (40) über eine Baufläche (50) eines dreidimensionalen Druckers (10) mit einer Geschwindigkeit V1 relativ zu der Baufläche (50) und gleichzeitiges Bewegen der Oberseite (42) des Förderbandes (41) mit einer Geschwindigkeit V2 relativ zu dem Förderbandsystem (40), um das zuvor auf der Oberseite (42) des Förderbandes (41) aufgenommene Material (32) auf der Baufläche (50) abzusetzen, so dass mindestens eine Schicht (34) von Material (32) auf der Baufläche (50) gebildet wird, wobei die Geschwindigkeiten V1 und V2 sich zumindest teilweise aufheben, so dass die resultierende Geschwindigkeit der Oberseite (42) des Förderbandes (41) relativ zur Baufläche (50) in Bezug auf jede der Geschwindigkeiten V1 und V2 reduziert ist;
8.4 Auftragen einer Flüssigkeit durch eine Druckvorrichtung (60) auf die mindestens eine Materialschicht (32), die zuvor auf der Baufläche (50) gebildet wurde, um einen Bindeeffekt des Materials (32) zu erzielen;
8.5 Abwärtsbewegen der Baufläche (50) um eine Höhe, die der Dicke der mindestens einen auf der Baufläche (50) gebildeten Materialschicht (32) entspricht;
8.6 wobei der Schritt des Aufnehmens eines Materials (32) über eine Öffnung (31) aus dem Materialreservoir (30) auf ein Förderband (41) des Förderbandsystems (40), so dass eine Schicht (33) von Material (32) auf dem Förderband (41) gebildet wird, durchgeführt wird, indem das Förderbandsystem (40) relativ zur Position des Materialreservoirs (30) bewegt wird, wobei das Förderbandsystem (40) relativ zur Position des Materialreservoirs (30) zwischen einer ersten und einer zweiten Stelle bewegt wird, wobei diese Bewegung zumindest eine horizontale Komponente umfasst.

9. Verfahren zum dreidimensionalen Drucken nach Anspruch 8, wobei die Differenz der Geschwindigkeiten V1 und V2 der resultierenden Geschwindigkeit der Oberseite (42) des Förderbandes (41) relativ zur Baufläche (50) entspricht und diese resultierende Geschwindigkeit kleiner als 0,02 m/s, vorzugsweise kleiner als 0,01 m/s, besonders bevorzugt kleiner als 0,005 m/s ist.

10. Verfahren zum dreidimensionalen Drucken nach einem der Ansprüche 8 bis 9, wobei der Schritt des Aufnehmens eines Materials (32) über eine Öffnung (31) aus dem Materialreservoir (30) auf ein Förderband (41) des Förderbandsystems (40), so dass eine Schicht (33) von Material (32) auf dem Förderband (41) gebildet wird, durch Bewegen der Oberseite (42) des Förderbandes (41) relativ zur Position des Materialreservoirs (30) durchgeführt wird.

11. Verfahren zum dreidimensionalen Drucken nach einem der Ansprüche 8 bis 10, wobei das Material (32) ein grobkörniges Material, beispielsweise ein feuerfestes Material, mit einer maximalen Korngröße von mehr als 0,3 mm, vorzugsweise mehr als 1 mm, vorzugsweise mehr als 2 mm, ist.

12. Verfahren zum dreidimensionalen Drucken nach einem der Ansprüche 8 bis 11, wobei die Öffnung (36) an die Korngrößenverteilung des Materials (32) angepasst ist, vorzugsweise so angepasst ist, dass der Spalt (35) in einer Richtung senkrecht zur Oberseite (42) des Förderbandes (41) eine Höhe von mindestens dem doppelten Wert der maximalen Korngröße des Materials (32) aufweist.

13. Verfahren zum dreidimensionalen Drucken nach einem der Ansprüche 8 bis 12, unter Verwendung eines Recoaters (20) nach einem der Ansprüche 1 bis 5 und/oder eines dreidimensionalen Druckers nach Anspruch 6.

## Revendications

1. Recouvrement (20) pour une imprimante tridimensionnelle (10) pour l'application d'un matériau (32) comprenant :
1.1 un réservoir de matériau (30) avec une ouverture (31) pour libérer un matériau (32) contenu dans le réservoir de matériau (30) ;
1.2 un système de convoyeur à bande (40) avec une bande transporteuse (41) avec une surface supérieure (42) de la bande transporteuse (41) ;
1.3 le système de convoyeur à bande (40) est adapté pour recevoir le matériau (32) via l'ouverture (31) du réservoir de matériau (30) sur la surface supérieure (42) de la bande transporteuse (41), de sorte qu'une couche (33) de matériau (32) peut être formée sur la surface supérieure (42) de la bande transporteuse (41);
1.4. le système de convoyeur à bande (40) peut être déplacé relativement à la position du réservoir de matériau (30) entre un premier et un second emplacement, **caractérisé en ce que** ce mouvement comprend au moins une composante horizontale.

2. Recouvrement (20) selon les revendications précédentes, alors que le réservoir de matériau (30) est sur un emplacement fixe et que le système de convoyeur à bande (40) peut être déplacé vers un premier emplacement, tel qu'une zone de chargement, et sur un second emplacement, tel qu'une zone de déchargement, où la première position est définie de telle sorte que la surface supérieure (42) de la bande transporteuse (41) peut recevoir le matériau (32) via l'ouverture (31) à partir du réservoir de matériau (30).

3. Recouvrement (20) selon les revendications précédentes, lorsque le système de convoyeur à bande (40) est positionné de manière à ce que la surface supérieure (42) de la bande transporteuse (41) puisse recevoir le matériau (32) via l'ouverture (31) du réservoir de matériau (30), un espace (35) est formé entre le réservoir de matériau (30) et la surface supérieure (42) de la bande transporteuse (41), lorsque la surface supérieure (42) de la bande transporteuse (41) se déplace par rapport à l'ouverture (31), une couche (33) de matériau (32) peut être reçue sur la surface supérieure (42) de la bande transporteuse (41) et l'espace (35) définit l'épaisseur de la couche (33) de matériau (32) reçue sur la surface supérieure (42) de la bande transporteuse (41).

4. Recouvrement (20) selon les revendications précédentes, dans lequel l'espace (35) a une hauteur dans une direction perpendiculaire à la surface supérieure (42) de la bande transporteuse (41) comprise entre 0,001 et 20 mm, de préférence entre 2 et 10 mm.

5. Recouvrement (20) selon les revendications précédentes, dans lequel l'espace (35) est défini par une porte réglable (36), de préférence une porte contrôlable électriquement (36).

6. Imprimante tridimensionnelle (10) pour l'application d'un matériau (32) comprenant :
6.1 une surface de construction (50) ;
6.2 un dispositif d'impression (60) ;
6.3 un dispositif de recouvrement (20) selon l'une quelconque des revendications précédentes ;
6.4 le système de convoyeur à bande (40) de la machine à recouvrir (20) est adapté pour se déplacer sur la surface de construction (50) et pour déposer le matériau (32) préalablement reçu sur la surface supérieure (42) du convoyeur à bande (41) sur la surface de construction (50), de sorte qu'une couche (34) de matériau (32) puisse être formée sur la surface de construction (50).

7. Utilisation d'un dispositif de recouvrement (20) selon l'une des revendications 1 à 5 ou d'une imprimante tridimensionnelle selon la revendication 6 pour l'impression d'un matériau réfractaire grossier dont la taille maximale des grains est supérieure à 0,3 mm, de préférence supérieure à 1 mm, et de préférence supérieure à 2 mm.

8. Procède d'impression tridimensionnelle comprenant les étapes suivantes
8.1 Déplacement d'un système de convoyeur à bande (40) jusqu'à une position située en dessous d'un réservoir de matériau (30) ;
8.2 Réception d'un matériau (32) par une ouverture (31) du réservoir de matériau (30) sur une surface supérieure (42) d'une bande transporteuse (41) du système de transport à bande (40), de sorte qu'une couche (33) de matériau (32) se forme sur la surface supérieure (42) de la bande transporteuse (41) ;
8. 3 Déplacer le système de convoyeur à bande (40) au-dessus d'une surface de construction (50) d'une imprimante tridimensionnelle (10) à une vitesse V1 par rapport à la surface de construction (50) et déplacer simultanément la surface supérieure (42) de la bande transporteuse (41) à une vitesse V2 par rapport au système de convoyeur à bande (40) pour déposer le matériau (32) précédemment reçu sur la surface supérieure (42) de la bande transporteuse (41) sur la surface de construction (50), de sorte qu'au moins une couche (34) de matériau (32) soit formée sur la surface de construction (50), tandis que les vitesses V1 et V2 s'annulent au moins partiellement de sorte que la vitesse résultante de la surface supérieure (42) de la bande transporteuse (41) par rapport à la surface de construction (50) est réduite par rapport à n'importe laquelle des vitesses V1 et V2 ;
8.4 Application d'un liquide par un dispositif d'impression (60) sur l'au moins une couche de matériau (32) précédemment formée sur la surface de construction (50) pour obtenir un effet de liaison du matériau (32) ;
8.5 Déplacement vers le bas de la surface de construction (50) d'une hauteur correspondant à l'épaisseur de la au moins une couche de matériau (32) formée sur la surface de construction (50) ;
8. 6. considérant que l'étape consistant à recevoir un matériau (32) via une ouverture (31) depuis le réservoir de matériau (30) sur une bande transporteuse (41) du système de transport à bande (40) de manière à former une couche (33) de matériau (32) sur la bande transporteuse (41), est réalisée en déplaçant le système de transport à bande (40) relativement à la position du réservoir de matériau (30), considérant que le système de transport à bande (40) est déplacé relativement à la position du réservoir de matériau (30) entre un premier et un second emplacement, considérant que ce mouvement comprend au moins une composante horizontale.

9. Procédé d'impression tridimensionnelle selon la revendication 8, alors que la différence des vitesses V1 et V2 correspond à la vitesse résultante de la surface supérieure (42) de la bande transporteuse (41) par rapport à la surface de construction (50) et que cette vitesse résultante est inférieure à 0,02 m/s, de préférence inférieure à 0,01 m/s, plus préférentiellement inférieure à 0,005 m/s.

10. Procédé d'impression tridimensionnelle selon les revendications 8 à 9, l'étape consistant à recevoir un matériau (32) par une ouverture (31) du réservoir de matériau (30) sur une bande transporteuse (41) du système de transport à bande (40) de manière à former une couche (33) de matériau (32) sur la bande transporteuse (41) étant réalisée en déplaçant la surface supérieure (42) de la bande transporteuse (41) par rapport à la position du réservoir de matériau (30).

11. Procédé d'impression tridimensionnelle selon les revendications 8 à 10, le matériau (32) étant un matériau à gros grains, tel qu'un matériau réfractaire, dont la taille maximale des grains est supérieure à 0,3 mm, de préférence supérieure à 1 mm, de préférence supérieure à 2 mm.

12. Procédé d'impression tridimensionnelle selon les revendications 8 à 11, dans lequel la porte (36) est adaptée à la distribution granulométrique du matériau (32), de préférence adaptée de manière à ce que l'espace (35) ait une hauteur dans une direction perpendiculaire à la surface supérieure (42) de la bande transporteuse (41) d'au moins le double de la valeur de la granulométrie maximale du matériau (32).

13. Procédé d'impression tridimensionnelle selon les revendications 8 à 12, utilisant un dispositif de recouvrement (20) selon les revendications 1 à 5 et / ou une imprimante tridimensionnelle selon la revendication 6.
